# EUROPEAN PATENT APPLICATION

(11) **EP 4 850 873 A1**
(43) Date of publication of application: **09.12.2026**
(21) Application number: 25748519.3
(22) Date of filing: 08.01.2025
(51) Int. Cl.: B25J 9/22

(54) **TEACHING DEVICE, CONTROL METHOD FOR TEACHING DEVICE, AND PROGRAM FOR TEACHING DEVICE**

(30) Priority: 29.01.2024 JP 2024010714
(71) Applicant: OMRON Corporation, Kyoto-shi, Kyoto 600-8530 (JP)
(72) Inventor: IWAMURA, Shintaro, Kyoto-shi, Kyoto 600-8530 (JP); SHIMAKAWA, Haruna, Kyoto-shi, Kyoto 600-8530 (JP); HASEGAWA, Naoto, Kyoto-shi, Kyoto 600-8530 (JP)
(74) Representative: Mewburn Ellis LLP
(86) International application number: PCT/JP2025/000334
(87) International publication number: WO 2025/164228

(57) **Abstract**

A technique for performing teaching of a robot while checking an effect of a light source by utilizing XR (Cross Reality) is provided. A device (100) includes: an XR screen generator configured to generate an XR screen that blends a real space and a virtual space; an XR event unit configured to detect an event related to the XR screen (12); an arrangement unit configured to update a position of a light source (146) provided at a tip of a robot (150) in the virtual space; and a teaching point storage configured to store a teaching point of the robot (150). The XR screen generator is configured to display, on the XR screen (12), a workpiece and the light source (146) in the virtual space. The arrangement unit is configured to move the light source (146) on the XR screen (12) based on detection of a movement event of the light source (146). The teaching point storage is configured to store the teaching point of the robot (150) that moves in conjunction with the light source (146).

## Description

### TECHNICAL FIELD

The present disclosure relates to a teaching technique for an industrial robot, and more particularly to a teaching technique using XR technology.

### BACKGROUND ART

Today, in a production line or the like of a factory (hereinafter, a production line, an inspection line and the like will be collectively and simply referred to as a line), articulated industrial robots (hereinafter, an industrial robot will be simply referred to as a robot) are frequently used. These robots can be used for assembly, transport or inspection of a workpiece. Further, these robots require processing called teaching. Conventionally, an operator performed teaching while operating an actual robot on site.

In recent years, a technology called XR (Cross Reality) has been developed. XR includes a technology relating to a virtual space and a technology of combining a virtual space and a real space. The XR has begun to be utilized in the industrial field.

Regarding a technique relating to teaching of a robot using XR, for example, Japanese Patent Laying-Open No. 2023-038781 (PTL 1) discloses a robot teaching system. The robot teaching system "has a display unit that displays a virtual robot in a virtual space, a recognition unit that recognizes an instruction of a teaching person for the virtual robot, and a notification unit that notifies whether or not an actual robot can be driven based on the instruction. In addition, the notification unit notifies that the actual robot can be driven based on the instruction. Alternatively, the notification unit notifies that the actual robot cannot be driven based on the instruction" (refer to [Abstract]).

### CITATION LIST

### PATENT LITERATURE

PTL 1: Japanese Patent Laying-Open No. 2023-038781

### SUMMARY OF INVENTION

### TECHNICAL PROBLEM

When a robot is used in an inspection process, a light source is an important element. An appropriate teaching point of the robot may also vary depending on the light source. According to the technique disclosed in PTL 1, an operator cannot perform teaching of the robot while checking an effect of the light source. Therefore, there is a need for a technique for performing teaching of a robot while checking an effect of a light source.

The present disclosure has been made in view of the background as described above, and an object in an aspect is to provide a technique for performing teaching of a robot while checking an effect of a light source by utilizing XR.

### SOLUTION TO PROBLEM

According to an embodiment, a device for teaching of a robot is provided. The device includes: an XR screen generator configured to generate an XR screen that blends a real space and a virtual space; an XR event unit configured to detect an event related to the XR screen; an arrangement unit configured to update a position of a light source provided at a tip of a robot in the virtual space; and a teaching point storage configured to store a teaching point of the robot. The XR screen generator is configured to display, on the XR screen, a workpiece and the light source in the virtual space. The arrangement unit is configured to move the light source on the XR screen based on detection of a movement event of the light source. The teaching point storage is configured to store the teaching point of the robot that moves in conjunction with the light source.

According to the disclosure described above, by utilizing the device, a user can intuitively perform teaching of the robot while checking the positions of the workpiece and the light source on the XR screen.

In an aspect, the XR screen generator is configured to read ambient light data about real-world ambient light, and reproduce reflected light from a surface of the workpiece on the XR screen based on light from the real-world ambient light and light from the light source.

According to the disclosure described above, the workpiece on the XR screen can reproduce reflected light of the workpiece in the real world. Therefore, by utilizing the device, the user can perform teaching of the robot as if the user were at a planned construction site for a line, even when the user is at a place other than the planned construction site for the line.

In an aspect, the arrangement unit is configured to fix the light source on the XR screen based on detection of a release event of the light source. Storing the teaching point of the robot includes storing the teaching point of the robot corresponding to a position and a posture of the fixed light source.

According to the disclosure described above, the device can store the teaching point of the robot corresponding to the position of the light source fixed on the XR screen.

In an aspect, the device further includes an image capturing unit configured to capture an image of the workpiece by a camera virtually arranged in a vicinity of the light source, based on detection of an image capturing event.

According to the disclosure described above, the device can capture the image of the workpiece at any teaching point. As an example, the user can obtain a captured image of a workpiece of an inspection robot at a tentative teaching point.

In an aspect, the XR screen generator is configured to display the captured image of the workpiece on the XR screen.

According to the disclosure described above, the user can easily check the captured image on the XR screen.

In an aspect, the device further includes a UI processor configured to display the captured image of the workpiece on a display of the device.

According to the disclosure described above, the user can easily check the captured image on the display of the device.

In an aspect, the device further includes an evaluation unit configured to perform image analysis on the captured image of the workpiece. Displaying the image of the workpiece includes displaying an image analysis result.

According to the disclosure described above, the device can perform analysis of the image captured at any teaching point. As an example, the user can obtain an appearance inspection result of the workpiece by the inspection robot at the tentative teaching point.

**In** an aspect, the device further includes: a light source adjustment unit configured to change at least one of on/off, a model number, brightness, or an emission color of the light source based on detection of a setting change event of the light source; and a light source setting storage configured to store a changed setting of the light source.

According to the disclosure described above, the device can change at least one of on/off, the model number, the brightness, or the emission color of the light source, and further store the changed setting.

**In** an aspect, the device further includes: an abnormality detection unit configured to detect an abnormality in the virtual space; and a warning unit configured to output a warning based on detection of the abnormality. The abnormality includes an abnormality that the light source is outside a movement range of the robot.

According to the disclosure described above, the device can output the warning based on detection of the abnormality in the virtual space. The abnormality may include the abnormality related to the movement range of the robot.

**In** an aspect, the abnormality includes at least one of an abnormality that an amount of light received by the workpiece is equal to or greater than a predetermined first threshold when the light source is turned on, or an abnormality that the amount of light received by the workpiece is less than a second threshold when the light source is turned on.

According to the disclosure described above, the device can output the warning when the amount of light received by the workpiece is equal to or less than the certain level, or equal to or more than the certain level. As an example, by referring to the warning, the user can recognize that illumination serving as the light source is placed too close to the workpiece, or that light of the illumination is not hitting the workpiece.

In an aspect, the warning output by the warning unit includes at least one of display of warning information on the XR screen, display of the warning information on an output device connected to the device, or vibration of an XR input device configured to move the light source.

According to the disclosure described above, the device can make it easier for the user to recognize the warning.

In an aspect, the device further includes a setting output unit configured to output the teaching point of the robot.

According to the disclosure described above, the device can output the teaching point of the robot. As an example, the device may directly transmit the teaching point of the robot to the actual robot.

According to an embodiment, a teaching method for a robot performed by a device is provided. The method includes: generating an XR screen that blends a real space and a virtual space; displaying, on the XR screen, a workpiece in the virtual space and a light source attached to a robot in the virtual space; moving the light source on the XR screen based on detection of a movement event of the light source; and storing a teaching point of the robot that moves in conjunction with the light source.

According to the disclosure described above, by utilizing the device that performs the method, a user can intuitively perform teaching of the robot while checking the positions of the workpiece and the light source on the XR screen.

According to an embodiment, a program for causing a device to perform teaching of a robot is provided. The program causes the device to perform: generating an XR screen that blends a real space and a virtual space; displaying, on the XR screen, a workpiece in the virtual space and a light source attached to a robot in the virtual space; moving the light source on the XR screen based on detection of a movement event of the light source; and storing a teaching point of the robot that moves in conjunction with the light source.

According to the disclosure described above, by utilizing the device that performs the program, a user can intuitively perform teaching of the robot while checking the positions of the workpiece and the light source on the XR screen.

### ADVANTAGEOUS EFFECTS OF INVENTION

According to an embodiment, it is possible to perform teaching of a robot while checking an effect of a light source by utilizing XR.

The foregoing and other objects, features, aspects and advantages of the contents of this disclosure will become more apparent from the following detailed description of the present disclosure when taken in conjunction with the accompanying drawings.

### BRIEF DESCRIPTION OF DRAWINGS

Fig. 1 is a diagram showing an example of teaching of a robot using a system 10 according to the present embodiment.
Fig. 2 is a diagram showing an example of a configuration of a device 100.
Fig. 3 is a diagram showing an example of an XR screen 300 in an initial state.
Fig. 4 is a diagram showing an example of an XR screen 400 after the occurrence of a movement event of an XR input device 130.
Fig. 5 is a diagram showing an example of an XR screen 500 after the occurrence of a hold event of a light source 146.
Fig. 6 is a diagram showing an example of an XR screen 600 after the occurrence of a movement event of light source 146.
Fig. 7 is a diagram showing an example of an XR screen 700 after the occurrence of a release event of light source 146.
Fig. 8 is a diagram showing an example of a function of reproducing an effect of light source 146 on a workpiece 144 on an XR screen 12.
Fig. 9 is a diagram showing an example of a function of capturing an image of workpiece 144.
Fig. 10 is a diagram showing an example of a function of adjusting brightness of light source 146.
Fig. 11 is a diagram showing an example of a function of adjusting an emission color of light source 146.
Fig. 12 is a diagram showing an example of a procedure of processing by system 10.

### DESCRIPTION OF EMBODIMENTS

Hereinafter, an embodiment of a technical idea according to the present disclosure will be described with reference to drawings. In the following description, the same components are denoted by the same reference characters. Their names and functions are also the same. Therefore, detailed description thereof will not be repeated. Further, each embodiment, each modification, a configuration of each piece of software, a configuration of each piece of hardware, each function, each type of processing, and the like may selectively be combined as appropriate.

### <A. Application Example>

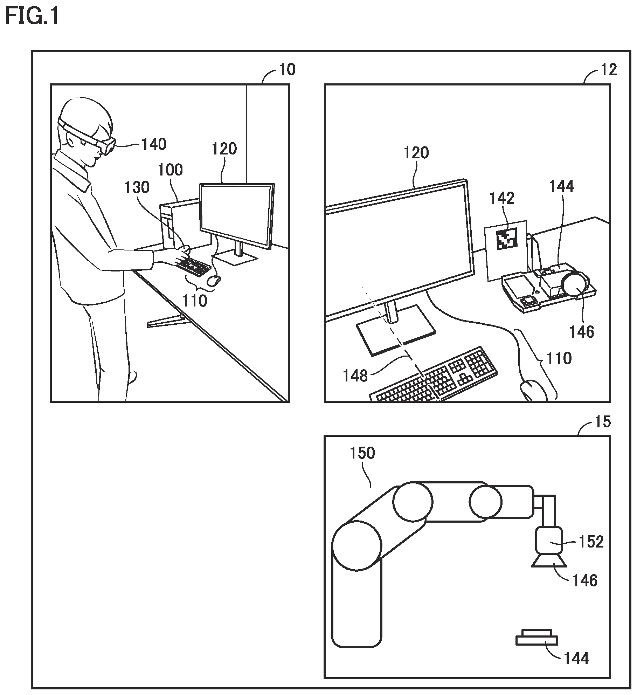

Fig. 1 is a diagram showing an example of teaching of a robot using a system 10 according to the present embodiment. System 10 is a system for performing teaching of a robot while checking an effect of a light source by utilizing XR. By using system 10, a user can intuitively perform teaching of the robot.

### (a. Terminology)

First, some terms necessary for understanding the technique of the present disclosure will be described. More specifically, a line, a workpiece, a robot, teaching, XR, a light source, and a system will be described.

The "line" herein refers to a facility composed of a belt conveyor, various sensors, a robot, a control device of the robot, and the like. The line includes a production line for producing a product or components thereof. Further, the line includes a transport line used in a logistics warehouse. Further, the line includes an inspection line for a product or components thereof. Further, the line can be used for any other purpose. Furthermore, the line may be a combination of lines for various purposes.

The "workpiece" herein is an object to be processed, assembled, transported, or inspected on a line. The workpiece may be a completed product. Further, the workpiece may be a component used for assembly of a product. The workpiece herein may refer to a workpiece that is a virtual object reproduced in a virtual space. Further, the workpiece herein may refer to a workpiece existing in a real space.

The "robot" herein is an industrial robot used with a line. The robot includes a vertical articulated robot, a horizontal articulated robot, a parallel link robot, an orthogonal robot, and a robot based on combination of these mechanisms.

The "teaching" herein refers to setting what kind of operation the robot should perform in a robot or a control device thereof. The teaching may include setting a destination position, a movement path or the like of the robot. The teaching is extremely important in using the robot and is burdensome for an operator. As an example, it is assumed that the robot is used for assembly or inspection of a product. In this case, the robot needs to move extremely accurately to a product assembly position or a product inspection position. Therefore, the operator repeatedly makes fine adjustments to the destination position of the robot while checking the operation of the robot on site. Hereinafter, the destination position of the robot may also be referred to as a "teaching point". The teaching point may include a coordinate and a posture of a tip of the robot or a tool attached to the tip. The posture may be represented as a combination of angles with each coordinate axis (X, Y, Z) being a rotational axis.

"XR" herein is an abbreviation for Cross Reality. XR is a generic term for technologies that blend the real world and a virtual world, and includes virtual reality (VR), augmented reality (AR), and mixed reality (MR).

VR is a technology that provides a user with an experience of entering a virtual world. The user uses a VR headset or the like when experiencing VR. As an example, by using the VR technology, the user can have an experience as if he/she is immersed in a game world.

AR is a technology to superimpose a virtual object on real-world scenery. A user uses a smartphone, a tablet, an AR glass, or the like when experiencing AR. As an example, by using the AR technology, the user can see a content or the like virtually arranged in a city.

MR is a technology to generate a mixed reality by superimposing the real world and a virtual world. A user uses an MR headset or the like when experiencing MR. MR is a technology developed further from AR. In AR, a virtual object is simply displayed on an AR glass or the like, thereby superimposing the virtual object on real-world scenery. In contrast, in MR, an MR device captures real-world footage. Then, a virtual object is synthesized with the real-world footage, thereby generating a mixed reality. Thus, MR can, for example, generate footage in consideration of the spatial relationship or the like between a real-world object and a virtual object.

The "light source" herein refers to all objects that emit light. As an example, illumination is a light source. Further, a source of natural light, ambient light or the like is also a light source. Further, the light source herein may refer to a light source reproduced in a virtual world. A light source in VR and AR can illuminate a virtual object. A light source in MR can illuminate both a real object and a virtual object. That is, a light source in XR including VR, AR and MR can illuminate at least a virtual object.

The "system" herein is configured by one device or a combination of a plurality of devices. The device may include a personal computer, a workstation, a server device, a tablet, or a smartphone. Further, the device may include an SoC (System-on-a-chip) and an SoM (System-on-Module). Further, the device may include any peripheral devices such as a switch, a router, a display, a keyboard, and a mouse. Furthermore, the device may include a virtual machine and an instance constructed on a cloud environment. In an aspect, the system may be connected to input/output devices such as a display and a keyboard, and used as a stand-alone device. In another aspect, the system can provide various functions as a service or a web application via a network. In this case, a user can use the functions of the system via a browser or client software installed on his/her own terminal.

### (b. Overview of System)

Next, a configuration of system 10 will be described. System 10 includes a device 100, an input device 110, an output device 120, an XR input device 130, and an XR output device 140. In an aspect, system 10 may not include input device 110, output device 120, or both. In these cases, XR input device 130 can also serve as input device 110. Further, XR output device 140 can also serve as output device 120.

Device 100 performs teaching processing based on input from the user. More specifically, device 100 performs generation and output of an XR image, storage of a teaching point, determination of a type and a position of a light source, and the like. Further, device 100 can recognize an operation by a user's gesture by analyzing an XR screen 12 captured by XR output device 140.

Input device 110 inputs various settings to device 100. Input device 110 may be configured to be capable of inputting, to device 100, the same information as information input from XR input device 130 to device 100. Output device 120 displays a setting screen for teaching. Output device 120 can display various settings, XR screen 12, and a virtual space 15. Further, output device 120 can display an image captured by a camera 152 in virtual space 15.

XR input device 130 is an interface for operating an object in XR screen 12. In system 10, XR input device 130 can move a position of a light source 146 of a robot 150. Light source 146 corresponds to illumination attached to a tip of robot 150. A detailed operation will be described later. XR input device 130 may include an acceleration sensor, a gyro sensor, and any other sensors. In an aspect, XR input device 130 can calculate a position of XR input device 130 based on a signal of each sensor. In this case, XR input device 130 transmits information about the position of XR input device 130 to device 100. In another aspect, XR input device 130 can calculate a direction of movement and an amount of movement of XR input device 130 based on a signal of each sensor. In this case, XR input device 130 transmits information about the direction of movement and the amount of movement of XR input device 130 to device 100. Furthermore, in another aspect, XR input device 130 can transmit a signal of each sensor to device 100. In this case, device 100 calculates a direction of movement and an amount of movement of XR input device 130 based on the signal of each sensor. In any case, device 100 can detect the current position, the direction of movement, the amount of movement, and the like of XR input device 130 in real time.

Further, XR input device 130 can receive various operation inputs from the user. In an aspect, XR input device 130 may include any operation units such as a button, a dial, a touch sensor, and a wheel. XR input device 130 can receive various operation inputs from the user via these operation units. In another aspect, XR input device 130 may read a user's gesture with an acceleration sensor, a gyro sensor, and the like. In this case, XR input device 130 receives the gesture as various operation inputs from the user. Alternatively, XR output device 140 may capture a user's gesture with a built-in camera (not shown). In this case, device 100 may receive a video from XR output device 140 and detect the gesture by analyzing the video. In any case, information about various operation inputs from the user is transmitted to device 100.

XR output device 140 outputs XR screen 12. XR output device 140 can be implemented as a headset, a glass-type device, or the like. The user can see XR screen 12 by wearing XR output device 140. XR output device 140 may have a function of capturing XR screen 12. XR output device 140 transfers captured XR screen 12 to device 100. In an aspect, XR output device 140 may record only a video of a virtual object synthesized with the real world. In another aspect, device 100 may have a capture function. In this case, device 100 records a video of a virtual object in virtual space 15.

### (c. XR Screen)

Next, XR screen 12 displayed on XR output device 140 will be described. In the example of Fig. 1, using system 10, the user is performing teaching of robot 150 reproduced in virtual space 15 for appearance inspection of a workpiece 144. Light source 146 and camera 152 are attached to the tip of robot 150. The appearance inspection is an example, and system 10 can support teaching of any operations such as processing, assembly and pickup of workpiece 144.

XR screen 12 is a screen displayed on XR output device 140. In an aspect, XR screen 12 may be a screen displayed by the AR technology. In this case, XR screen 12 is a screen in which a virtual object is superimposed on the real world. In another aspect, XR screen 12 may be a screen displayed by the MR technology. In this case, XR screen 12 is a mixed reality screen in which a virtual object is synthesized with real-world footage.

In the example of Fig. 1, a real-space object and a virtual object are displayed on XR screen 12. Input device 110, output device 120, and a marker 142 are real-space objects. The real-space object may include any object in a user's field of view, in addition to the objects shown in Fig. 1. Workpiece 144, light source 146, and a laser beam 148 are virtual objects. In an aspect, XR screen 12 may include a display of robot 150, camera 152, or both. In this case, robot 150, camera 152, or both may be displayed semi-transparently, or only outlines thereof may be displayed.

Marker 142 is a reference for determining a display coordinate of a virtual object. Workpiece 144 and light source 146 can be displayed at predetermined locations when viewed from marker 142. In an aspect, system 10 may recognize marker 142 as the origin of a three-dimensional space. Then, system 10 can arrange workpiece 144 and light source 146 at predetermined relative positions (that can be represented by XYZ coordinates) when viewed from the origin.

Workpiece 144 corresponds to workpiece 144 in virtual space 15. Light source 146 corresponds to the illumination attached to the tip of robot 150 in virtual space 15. Light source 146 may be represented by computer aided design (CAD) data of the illumination, or may be represented by any shape such as a cylinder.

Laser beam 148 indicates a direction in which a tip of XR input device 130 is pointing. To the user, laser beam 148 appears to be a visualized laser beam emitted from the tip of XR input device 130. Laser beam 148 can be represented by a dotted line, a straight line, or any other shape. Further, laser beam 148 can be represented by any color or brightness.

System 10 reproduces effects of various light sources on workpiece 144 in XR screen 12. A first effect is an effect of light source 146, which is the illumination attached to robot 150. When light source 146 is arranged near workpiece 144, workpiece 144 appears, to the user, to be illuminated by light source 146. A second effect is an effect of ambient light. Device 100 is configured to be capable of registering in advance information about ambient light at a planned construction site for a line or the like. As an example, the information about ambient light may be a high dynamic range (HDR) image or a video. By reading the information about ambient light, device 100 can reproduce the ambient light of the planned construction site for the line or the like in virtual space 15 and XR screen 12. Thus, to the user, workpiece 144 appears to be illuminated by the ambient light. However, device 100 does not have to arrange a light source of ambient light in XR screen 12. Device 100 may reproduce only reflection of light from a surface of workpiece 144 due to the ambient light in XR screen 12.

### (d. Procedure of Teaching)

Next, a procedure of teaching performed by the user using system 10 will be described. First, the user applies laser beam 148 to light source 146. Then, by performing a first operation on XR input device 130, the user can draw light source 146 to the tip of XR input device 130 or the vicinity thereof. In an aspect, the first operation may be pressing any button provided on XR input device 130. In another aspect, the first operation may be a gesture using XR input device 130 or a part of a user's body.

Next, the user moves XR input device 130, thereby moving light source 146 drawn to XR input device 130 to a desired position. XR input device 130 is held by the user. That is, the user can move light source 146 intuitively, as if the user moves a flashlight held in his/her hand. When the user moves light source 146, light source 146 in virtual space 15 also moves in conjunction. As described above, in virtual space 15, light source 146 is attached to the tip of robot 150. Therefore, when light source 146 moves, robot 150 also moves in conjunction. That is, it can also be said that the user is moving the tip of robot 150 together with light source 146. Hereinafter, a state in which light source 146 is held at the tip of XR input device 130 or the vicinity thereof will be referred to as a "hold state". Further, bringing light source 146 into the hold state will be referred to as "holding light source 146". More specifically, device 100 acquires position information about a destination of light source 146 as needed from XR input device 130 in the hold state. Alternatively, device 100 may calculate position information about a destination of light source 146 as needed based on a positional relationship between XR input device 130 and light source 146 in the hold state. Device 100 moves light source 146 in virtual space 15 based on the position information about the destination of light source 146. Further, device 100 moves robot 150 based on movement of light source 146 in virtual space 15. Moving robot 150 includes changing an angle of each joint of robot 150.

Next, by performing a second operation, the user can fix light source 146 in XR screen 12. In an aspect, the second operation may be pressing any button provided on XR input device 130. In another aspect, the second operation may be a gesture using XR input device 130 or a part of the user's body. Hereinafter, a state in which light source 146 is fixed in XR screen 12 will be referred to as a "release state". Further, bringing light source 146 into the release state will be referred to as "releasing light source 146".

By using the function of holding and releasing light source 146, the user can intuitively determine a position of light source 146 with respect to workpiece 144. When the position of light source 146 is determined, a teaching point of the robot corresponding to the position of light source 146 is also automatically determined. That is, the user can intuitively determine the teaching point of the robot equipped with light source 146.

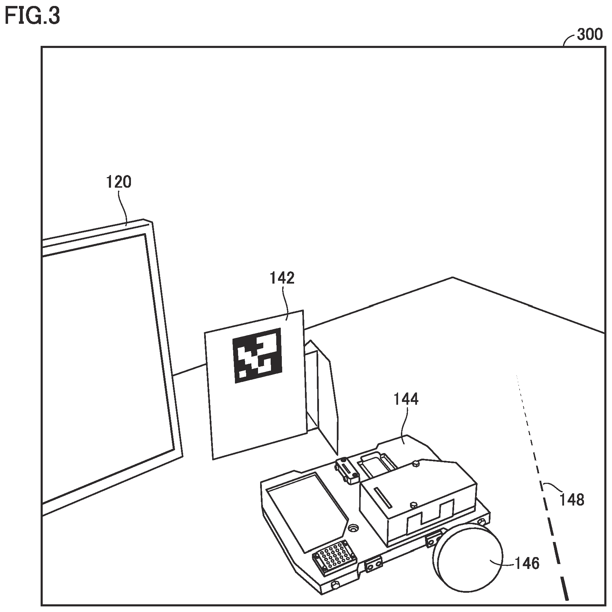

The ambient light registered in advance is reproduced in XR screen 12. That is, in XR screen 12, reflected light from the surface of workpiece 144 due to the ambient light and light source 146 is reproduced. As an example, the ambient light registered in advance may be ambient light at a planned construction site for a line. In this case, the user can observe workpiece 144 via XR screen 12 as if the user were at the planned construction site for the line. Details of various functions of system 10 will be described later with reference to Figs. 3 to 12.

### <B. Device Configuration>

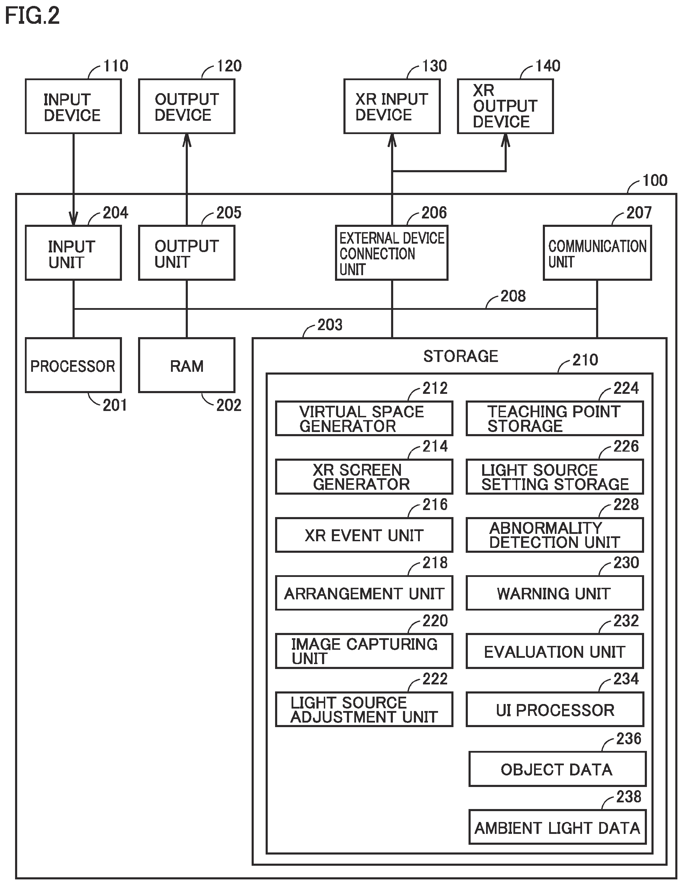

Fig. 2 is a diagram showing an example of a configuration of device 100. Device 100 includes a processor 201, a random access memory (RAM) 202, a storage 203, an input unit 204, an output unit 205, an external device connection unit 206, and a communication unit 207. Further, storage 203 stores a program 210.

Processor 201 can execute programs for implementing various functions of device 100. Processor 201 is configured by, for example, at least one integrated circuit. According to an embodiment, the integrated circuit may include at least one central processing unit (CPU), at least one graphics processing unit (GPU), at least one field programmable gate array (FPGA), at least one application specific integrated circuit (ASIC), at least one artificial intelligence (AI) chip, a combination thereof, or the like.

RAM 202 functions as a workspace of processor 201. RAM 202 stores the programs executed by processor 201 and data referred to by processor 201. In an aspect, RAM 202 can be implemented by dynamic random access memory (DRAM), static random access memory (SRAM), or the like.

Storage 203 is a non-volatile memory, and stores the programs executed by processor 201 and the data referred to by processor 201. Processor 201 executes a program read from storage 203 to RAM 202, and refers to data read from storage 203 to RAM 202. In an aspect, storage 203 can be implemented by a hard disk drive (HDD), a solid state drive (SSD), an erasable programmable read only memory (EPROM), an electrically erasable programmable read only memory (EEPROM), a flash memory, or the like.

Input unit 204 can be connected to any input device 110 such as a keyboard, a mouse, a touchpad, or a gamepad. In an aspect, input unit 204 can be implemented by a USB terminal, a PS/2 terminal, a Bluetooth (registered trademark) module, or the like.

Output unit 205 can be connected to any output device 120 such as a cathode ray tube display, a liquid crystal display, or an organic electro-luminescence (EL) display. In an aspect, output unit 205 can be implemented by a USB terminal, a D-sub terminal, a digital visual interface (DVI) terminal, a high-definition multimedia interface (HDMI) (registered trademark) terminal, a DisplayPort terminal, or the like.

External device connection unit 206 can be connected to any external devices such as XR input device 130, XR output device 140, a printer, a scanner, and an external HDD. In an aspect, external device connection unit 206 can be implemented by a universal serial bus (USB) terminal or the like. In another aspect, XR input device 130 may be connected to input unit 204. Further, XR output device 140 may be connected to output unit 205.

Communication unit 207 is connected to other devices via a wired network or a wireless network. In an aspect, communication unit 207 can be implemented by a wired local area network (LAN) port, a wireless fidelity (Wi-Fi) (registered trademark) module, or the like. In another aspect, communication unit 207 can transmit and receive data using a communication protocol such as Transmission Control Protocol/Internet Protocol (TCP/IP) or User Datagram Protocol (UDP).

Program 210 includes various functional units for implementing the function of teaching of the robot. Further, program 210 can refer to various data for implementing the function of teaching of the robot. More specifically, program 210 includes, as functional units, a virtual space generator 212, an XR screen generator 214, an XR event unit 216, an arrangement unit 218, an image capturing unit 220, a light source adjustment unit 222, a teaching point storage 224, a light source setting storage 226, an abnormality detection unit 228, a warning unit 230, an evaluation unit 232, and a user interface (UI) processor 234. In an aspect, some of these functional units may be implemented as hardware. Further, program 210 refers to object data 236 and ambient light data 238.

Virtual space generator 212 generates virtual space 15. Virtual space generator 212 arranges at least robot 150 to be taught, light source 146, and workpiece 144 in virtual space 15. In an aspect, virtual space generator 212 may arrange various tools such as camera 152 attached to the tip of robot 150 in virtual space 15, in addition to light source 146. In another aspect, virtual space generator 212 may arrange a part or all of a line in virtual space 15. Further, virtual space generator 212 can read ambient light data 238 and reproduce real-world ambient light in virtual space 15. Furthermore, virtual space generator 212 also updates virtual space 15 based on update of XR screen 12. Thus, the position of each object, the setting of the light source, and the like can be linked in virtual space 15 and XR screen 12. Virtual space generator 212 and XR screen generator 214 may be configured to always exchange latest states with each other.

XR screen generator 214 generates XR screen 12. In an aspect, XR screen generator 214 may superimpose a virtual object on the real world by the AR technology. In another aspect, XR screen generator 214 may synthesize the real world and a virtual world to generate a mixed reality screen by the MR technology. XR screen generator 214 can determine a display position of each object using marker 142.

XR event unit 216 detects various events related to XR screen 12. XR event unit 216 notifies other functional units of a detected event as necessary. The various events may include various operation inputs from the user. The events include a hold event corresponding to holding of light source 146 and a release event corresponding to releasing of light source 146. Further, the events include a movement event. The movement event relates to movement of XR input device 130 in the release state and movement of XR input device 130 in the hold state. Further, the events include an image capturing event corresponding to capturing an image of workpiece 144 by camera 152. Further, the events include an on/off switching event corresponding to switching between turn-on and turn-off of light source 146. Furthermore, the events include a setting change event of the light source corresponding to a change of at least one of a model number, brightness, or an emission color of light source 146.

Arrangement unit 218 updates arrangement of an object on XR screen 12 based on an event acquired from XR event unit 216. Typically, arrangement unit 218 updates arrangement of light source 146 in response to detection of the hold event and the movement event. In an aspect, XR screen generator 214 may include the function of arrangement unit 218. In this case, XR event unit 216 notifies XR screen generator 214 of a detected event.

Image capturing unit 220 captures an image of the inside of virtual space 15 by camera 152 based on the image capturing event acquired from XR event unit 216. As an example, camera 152 captures an image of workpiece 144 in virtual space 15. Real-space ambient light and light source 146 are reproduced in virtual space 15. Therefore, image capturing unit 220 can capture an image similar to an image of workpiece 144 captured in the real world. Image capturing unit 220 outputs the image obtained by image capturing to evaluation unit 232.

Light source adjustment unit 222 switches between turn-on and turn-off of light source 146 based on the on/off switching event acquired from XR event unit 216. Further, light source adjustment unit 222 changes at least one of the model number, the brightness, or the emission color of light source 146 based on the setting change event of the light source acquired from XR event unit 216.

Teaching point storage 224 updates and stores a teaching point based on the release event acquired from XR event unit 216. In an aspect, teaching point storage 224 may update and store the teaching point based on the occurrence of a teaching point storage event. In this case, XR input device 130 is configured to be capable of receiving an operation input for storing the teaching point.

Light source setting storage 226 updates and stores a setting of light source 146. In an aspect, light source setting storage 226 may store a current setting of light source 146 in virtual space 15 based on the on/off switching event and/or the setting change event of the light source. In another aspect, light source setting storage 226 may store a current setting of light source 146 in virtual space 15 based on the occurrence of a storage event of the setting of light source 146. In this case, XR input device 130 is configured to be capable of receiving an operation input for changing the setting of light source 146.

Abnormality detection unit 228 detects one or more abnormalities in virtual space 15. Further, abnormality detection unit 228 outputs information about a detected abnormality to warning unit 230. The one or more abnormalities include an abnormality related to the teaching point and an abnormality related to the light source. As an example, it is assumed that light source 146 has moved outside a movement range of robot 150 because the user has moved XR input device 130 significantly. In this case, abnormality detection unit 228 detects the abnormality related to the teaching point. As another example, it is assumed that light applied to workpiece 144 is brighter than a first threshold or darker than a second threshold. In this case, abnormality detection unit 228 detects the abnormality related to the light source. That is, abnormality detection unit 228 can detect an abnormality that light is not sufficiently hitting workpiece 144, an abnormality that light applied to workpiece 144 is too strong, or the like.

Warning unit 230 displays information about the one or more detected abnormalities on XR screen 12, output device 120, or both. By referring to the displayed information about the one or more abnormalities, the user can recognize that there is a problem with his/her own operation input.

Evaluation unit 232 analyzes the image acquired from image capturing unit 220, and displays an analysis result on XR screen 12, output device 120, or both. As an example, by referring to the analysis result, the user can recognize whether or not appearance inspection of workpiece 144 is completed. By utilizing the function of evaluation unit 232, the user can easily check a result of the appearance inspection of workpiece 144 for each teaching point.

UI processor 234 displays a UI related to system 10 on output device 120. Further, UI processor 234 can receive any operation input from the user via the UI displayed on output device 120. As an example, UI processor 234 can display at least one of XR screen 12, a screen of virtual space 15, a warning screen, and a screen of the image analysis result on output device 120. Further, all screens displayed on output device 120 may be displayed via UI processor 234.

Object data 236 is data of an object arranged in virtual space 15. As an example, object data 236 may be CAD data. A virtual object displayed on XR screen 12 can also be generated from object data 236. Device 100 can have necessary object data 236 registered in advance via UI processor 234 or the like.

Ambient light data 238 is data for reproducing ambient light. As an example, ambient light data 238 may be an HDR image or a video. Device 100 can have necessary ambient light data 238 registered in advance via UI processor 234 or the like. Furthermore, device 100 may be configured to be capable of switching among a plurality of pieces of ambient light data 238. Thus, the user can reproduce an environment of each of a plurality of factories in virtual space 15, and easily perform teaching of a robot installed in each factory.

As described with reference to Fig. 2, device 100 includes XR screen generator 214 configured to generate XR screen 12 that blends a real space and a virtual space 15. Device 100 also includes XR event unit 216 configured to detect an event related to XR screen 12. Device 100 also includes arrangement unit 218 configured to update a position of a light source provided at a tip of robot 150 in virtual space 15. Device 100 further includes teaching point storage 224 configured to store a teaching point of robot 150. XR screen generator 214 is configured to display, on XR screen 12, workpiece 144 and light source 146 in virtual space 15. Arrangement unit 218 is configured to move light source 146 on XR screen 12 based on detection of a movement event of light source 146. Teaching point storage 224 is configured to store the teaching point of robot 150 that moves in conjunction with light source 146.

In an aspect, XR screen generator 214 reads ambient light data 238 about real-world ambient light. XR screen generator 214 reproduces reflected light from a surface of workpiece 144 on XR screen 12 based on light from the real-world ambient light and light from light source 146.

In an aspect, device 100 may further include a setting output unit (not shown) that outputs the teaching point of robot 150. The setting output unit can also output the teaching point and the light source setting. The setting output unit can output various settings to any device such as actual robot 150 or a control device thereof.

### <C. Teaching Procedure>

A procedure of teaching of robot 150 using system 10 will be described with reference to Figs. 3 to 11. In addition, a function related to light source 146 and a function of testing appearance inspection will also be described. Screens shown in Figs. 3 to 11 are examples of display of XR screen 12.

### (a. Procedure of Storing Teaching Point)

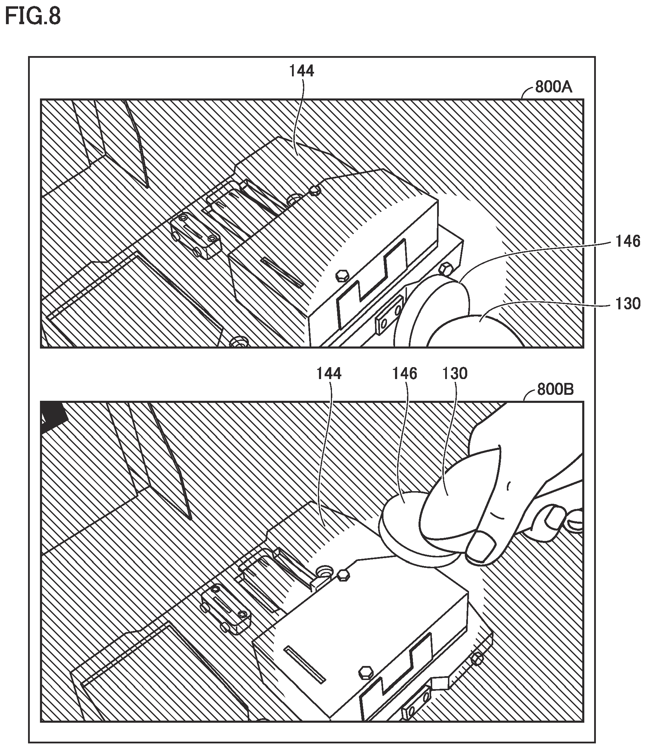

Figs. 3 to 7 show typical examples of a series of procedures up to storing a teaching point of robot 150. A procedure from display of an initial screen to storage of a teaching point of a robot by a user will be described with reference to Figs. 3 to 7. Various functions shown in Figs. 8 to 11 can be performed even in the middle of the operations shown in Figs. 3 to 7. Each XR screen shown in each of Figs. 3 to 11 is an example of display of XR screen 12 in various scenes.

Fig. 3 is a diagram showing an example of an XR screen 300 in an initial state. XR screen 300 is a screen before the user performs teaching. Device 100 arranges workpiece 144 and light source 146 on XR screen 300 based on a position of marker 142. In addition, device 100 also displays laser beam 148 on XR screen 12. Device 100 displays workpiece 144 and light source 146 on XR screen 300 based on CAD data stored in storage 203. Further, device 100 determines brightness, an emission color, and the like of light source 146 based on light source data stored in storage 203. Furthermore, device 100 reproduces ambient light on XR screen 300 based on ambient light data 238 stored in storage 203. As an example, device 100 reproduces reflected light from a surface of workpiece 144 due to the ambient light.

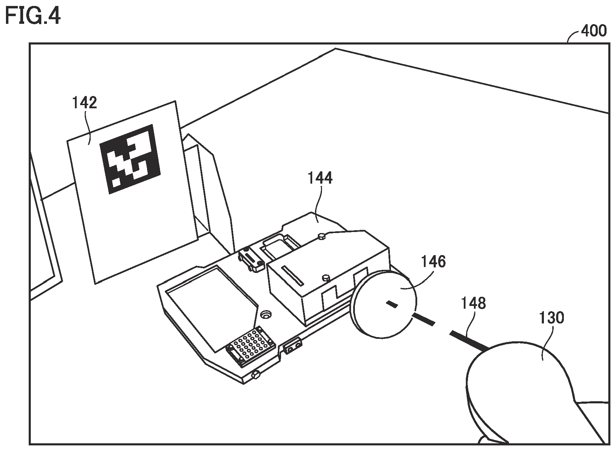

In an aspect, system 10 may display camera 152 and/or robot 150 on XR screen 300. At that time, system 10 may display semi-transparent camera 152 and/or robot 150 on XR screen 300. Alternatively, system 10 may display camera 152 and/or robot 150 with only an outline on XR screen 300. The same applies to the XR screens in Figs. 4 to 11.

Fig. 4 is a diagram showing an example of an XR screen 400 after the occurrence of the movement event of XR input device 130. XR screen 400 is a screen of a scene after XR screen 300. When the user moves XR input device 130, laser beam 148 also moves in conjunction with XR input device 130. In the example of Fig. 4, laser beam 148 points toward light source 146.

The operation in Fig. 4 will be described in more detail. When the user moves XR input device 130, information about a direction of movement and an amount of movement of XR input device 130 is transmitted from XR input device 130 to device 100. In relation to this, XR event unit 216 detects the occurrence of the movement event of XR input device 130. XR event unit 216 outputs the detected event to arrangement unit 218. Arrangement unit 218 moves a position of laser beam 148 in conjunction with XR input device 130. At this time, arrangement unit 218 can refer to the information about the direction of movement and the amount of movement of XR input device 130. XR screen generator 214 updates XR screen 300 to XR screen 400 based on movement of the object.

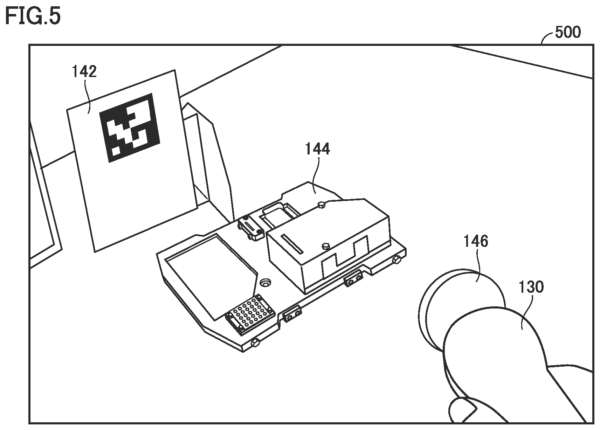

Processing similar to the above-described processing is also performed for the operations in Figs. 5 to 7. That is, XR event unit 216 detects the occurrence of some event and outputs the detected event to arrangement unit 218. Then, arrangement unit 218 moves the object based on notification of the event. At this time, arrangement unit 218 can refer to various data in storage 203 as necessary. Furthermore, XR screen generator 214 updates XR screen 12 based on movement of the object. In an aspect, XR screen generator 214 may update XR screen 12 based on notification of the event from XR event unit 216. In another aspect, XR screen generator 214 may update XR screen 12 based on notification of the movement of the object from arrangement unit 218.

Fig. 5 is a diagram showing an example of an XR screen 500 after the occurrence of the hold event of light source 146. XR screen 500 is a screen of a scene after XR screen 400. It is assumed that the user provides a hold operation input to XR input device 130 in a state where laser beam 148 is hitting light source 146. In this case, light source 146 is drawn to the tip of XR input device 130 or the vicinity thereof. That is, light source 146 is held by XR input device 130.

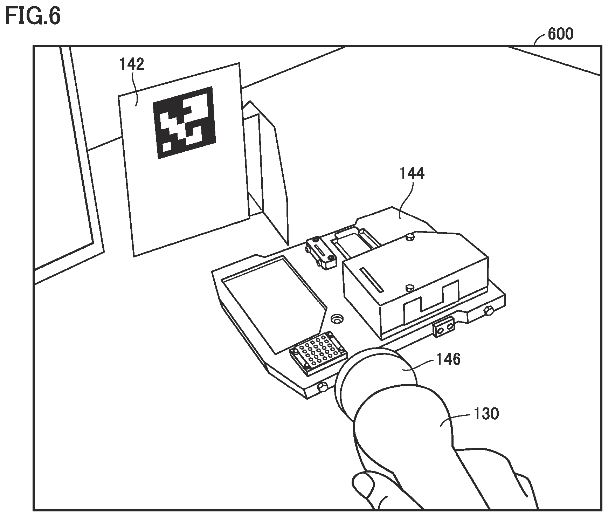

Fig. 6 is a diagram showing an example of an XR screen 600 after the occurrence of the movement event of light source 146. It is assumed that the user moves XR input device 130 in a state where light source 146 is held. In this case, light source 146 also moves in a state of being held by XR input device 130. The movement here includes translation of light source 146, rotation of light source 146, or a combination thereof.

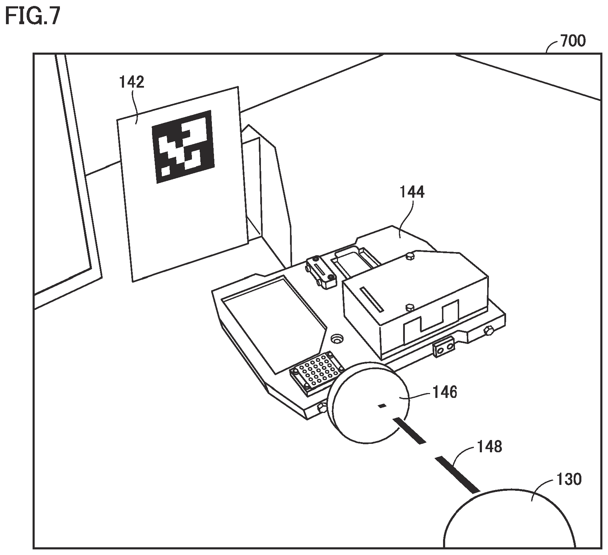

Fig. 7 is a diagram showing an example of an XR screen 700 after the occurrence of the release event of light source 146. It is assumed that the user provides a release operation input to XR input device 130 in a state where light source 146 is held. In this case, light source 146 is fixed at a position where the release operation input is provided. When light source 146 is released, a new teaching point is stored in teaching point storage 224. The new teaching point is the position where light source 146 is fixed. The position of light source 146 includes a coordinate and a posture of light source 146 in virtual space 15. In this way, arrangement unit 218 fixes the light source on XR screen 12 based on detection of the release event of the light source. Storing the teaching point of robot 150 includes storing the teaching point of robot 150 corresponding to the position and the posture of fixed light source 146.

By performing the series of operations described with reference to Figs. 3 to 7, the user can intuitively determine a relative position of light source 146 with respect to workpiece 144. That is, the user can intuitively determine a relative position of the tool or an end effector at the tip of robot 150 with respect to workpiece 144.

### (b. Function of Reproducing Effect of Light Source)

Fig. 8 is a diagram showing an example of a function of reproducing an effect of light source 146 on workpiece 144 on XR screen 12. In an XR screen 800A, light source 146 is located beside workpiece 144. In this case, light from light source 146 illuminates a side surface of workpiece 144. As a result, to the user, the side surface of workpiece 144 appears to be strongly illuminated. In an XR screen 800B, light source 146 is located above workpiece 144. In this case, light from light source 146 illuminates an upper surface of workpiece 144. As a result, to the user, the upper surface of workpiece 144 appears to be strongly illuminated.

As described above, device 100 reproduces reflected light from the surface of workpiece 144 in accordance with the position of light source 146. More specifically, device 100 reproduces the reflected light from the surface of workpiece 144 based on light source 146 and the ambient light in virtual space 15. Then, device 100 displays, on XR screen 12, workpiece 144 with the reproduced reflected light.

By providing an operation input for on/off switching of light source 146 to XR input device 130, the user can switch between turn-on and turn-off of light source 146. By making a gesture, pressing the button on XR input device 130, or the like, the user can switch between turn-on and turn-off of light source 146. When the operation input for on/off switching of light source 146 is provided to XR input device 130, XR event unit 216 detects the on/off switching event of light source 146.

As described above, the user can determine arrangement of light source 146 while checking the brightness of the surface of workpiece 144 via XR screen 12. That is, the user can determine the teaching point of robot 150 while checking the brightness of the surface of workpiece 144 via XR screen 12.

### (c. Function of Testing Appearance Inspection)

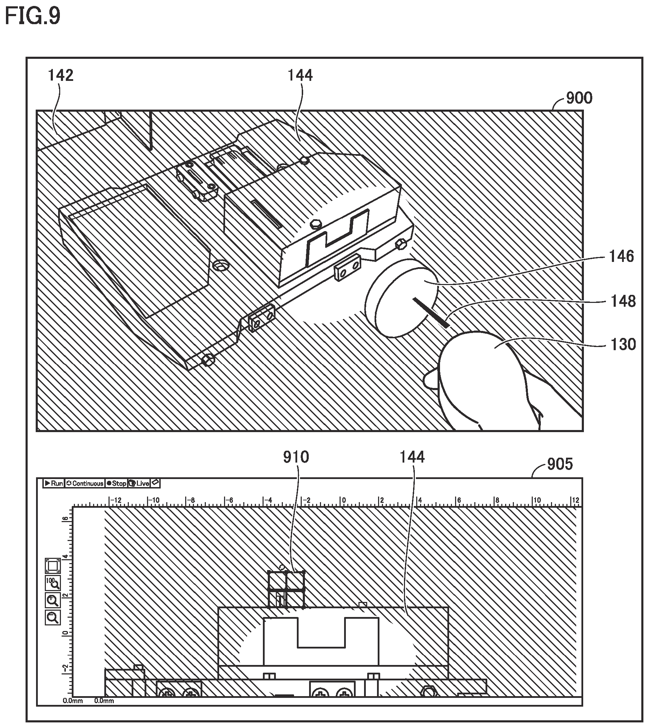

Fig. 9 is a diagram showing an example of a function of capturing an image of workpiece 144. In an XR screen 900, the user captures an image of the workpiece using camera 152 attached to the tip of robot 150. A position of camera 152 is substantially equal to that of light source 146. Therefore, the user can capture an image of workpiece 144 while intuitively adjusting the position of camera 152 by moving XR input device 130. Device 100 can capture an image of workpiece 144 based on reception of an input operation for image capturing. Device 100 can receive the input operation for image capturing via XR input device 130 or input device 110.

Camera 152 does not capture an image of a part of XR screen 900, but captures an image of only objects in virtual space 15. That is, only the objects existing in virtual space 15 appear in a captured image 905. Referring to Fig. 9 by way of example, marker 142 and workpiece 144 exist on image 905. It is assumed that the user performs image capturing in a state where camera 152 captures marker 142 and workpiece 144 in an image capturing range. In this case, only workpiece 144 appears in image 905 obtained by image capturing. Further, reflected light from the objects is reproduced in virtual space 15. Therefore, image 905 also includes reflected light from the surface of workpiece 144 which is an object.

Device 100 can capture an image of workpiece 144 regardless of a state of light source 146. That is, device 100 can capture an image of workpiece 144 in a state where light source 146 is held. Further, device 100 can capture an image of workpiece 144 in a state where light source 146 is released.

Image 905 is displayed on XR screen 900, output device 120, or both. In an aspect, displayed image 905 may include an image analysis result 910. As an example, it is assumed that the user is performing teaching of robot 150 for appearance inspection of workpiece 144. In this case, when the user captures an image of workpiece 144, device 100 executes an image recognition program for actual appearance inspection on the captured image. Then, device 100 outputs image 905 including image analysis result 910. In an aspect, device 100 may be configured to be capable of receiving a setting of the image recognition program to be used via UI processor 234 or the like.

By providing an operation input for image capturing to XR input device 130, the user can capture an image of an object in virtual space 15 by camera 152. By making a gesture, pressing the button on XR input device 130, or the like, the user can capture an image of workpiece 144. When the operation input for image capturing is provided to XR input device 130, XR event unit 216 detects the image capturing event.

As described above, the user can easily check whether appearance inspection is appropriately performed at a current position of camera 152 while intuitively adjusting the position of camera 152 via XR screen 12. Thus, the user can find out a position where appearance inspection is appropriately performed, and register the position in device 100 as a teaching point.

As described with reference to Fig. 9, device 100 includes image capturing unit 220. Image capturing unit 220 captures an image of workpiece 144 by camera 152 virtually arranged in the vicinity of light source 146 based on detection of the image capturing event.

In an aspect, XR screen generator 214 may display captured image 905 of workpiece 144 on XR screen 12. In another aspect, UI processor 234 may display captured image 905 of workpiece 144 on output device 120 which is a display of device 100. Alternatively, image 905 may be displayed on both XR screen 12 and output device 120.

Further, device 100 includes evaluation unit 232. Evaluation unit 232 performs image analysis on captured image 905 of workpiece 144. Displaying image 905 of the workpiece includes displaying image analysis result 910.

### (d. Function of Changing Illumination Setting)

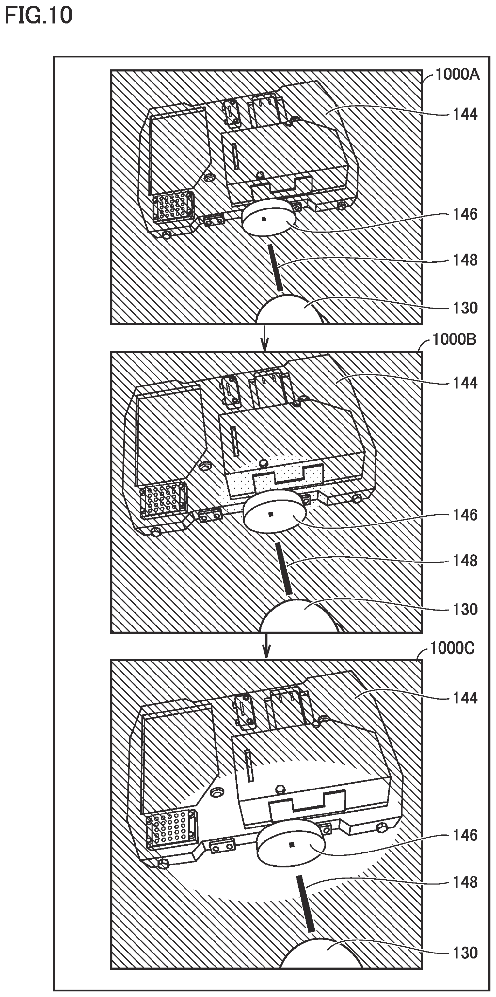

Fig. 10 is a diagram showing an example of a function of adjusting the brightness of light source 146. The user can adjust the brightness of light source 146 while referring to XR screen 12. XR screens 1000A, 1000B, and 1000C show how the brightness of light source 146 changes. Referring to XR screens 1000A, 1000B, and 1000C, it can be seen that the brightness of light source 146 gradually increases. Device 100 can adjust the brightness of light source 146 to be gradually higher and gradually lower.

More specifically, device 100 adjusts the brightness of light source 146 in virtual space 15. Then, a result of adjustment of the brightness of light source 146 is reflected on XR screen 12. Device 100 can adjust the brightness of light source 146 regardless of a state of light source 146. That is, device 100 can adjust the brightness of light source 146 in a state where light source 146 is held. Further, device 100 can adjust the brightness of light source 146 in a state where light source 146 is released.

By providing an operation input for adjusting the brightness of light source 146 to XR input device 130, the user can adjust the brightness of light source 146. By making a gesture, pressing the button on XR input device 130, or the like, the user can adjust the brightness of light source 146. When the operation input for adjusting the brightness of light source 146 is provided to XR input device 130, XR event unit 216 detects a brightness adjustment event of light source 146.

As described above, the user can easily adjust the brightness of light source 146 via XR screen 12. That is, the user can easily adjust the brightness of the illumination attached to the tip of robot 150 via XR screen 12. As an example, by combining the image capturing function and the brightness adjustment function of light source 146, the user can find out the brightness of light source 146 suitable for appearance inspection of workpiece 144.

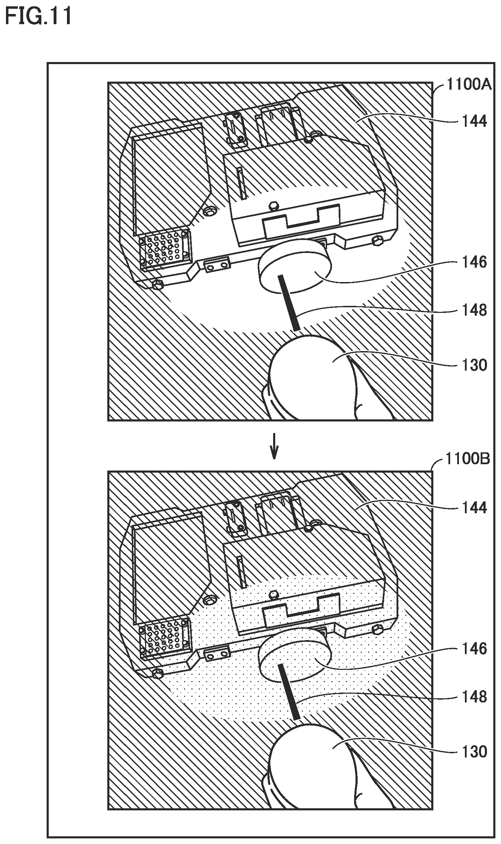

Fig. 11 is a diagram showing an example of a function of adjusting the emission color of light source 146. The user can adjust the emission color of light source 146 while referring to XR screen 12. XR screens 1100A and 1100B show how the emission color of light source 146 changes. In an aspect, device 100 may be configured to be capable of individually adjusting brightness of each color of RGB of light source 146. In another aspect, device 100 may be configured to be capable of selecting the emission color of light source 146 from a plurality of candidates. In another aspect, device 100 may be configured to be capable of providing a function of selecting a color from a gradation, a color palette, or the like displayed on XR screen 12. Furthermore, device 100 may be configured to be capable of switching an operation procedure or UI for adjusting the emission color based on a model number of the illumination selected as light source 146.

Similarly to the adjustment of the brightness of light source 146, device 100 adjusts the emission color of light source 146 in virtual space 15. Then, a result of adjustment of the emission color of light source 146 is reflected on XR screen 12. Device 100 can adjust the emission color of light source 146 regardless of the hold/release state of light source 146. By providing an operation input for adjusting the emission color of light source 146 to XR input device 130, the user can adjust the emission color of light source 146. When the operation input for adjusting the emission color of light source 146 is provided to XR input device 130, XR event unit 216 detects an emission color adjustment event of light source 146.

As described above, the user can easily adjust the emission color of light source 146 via XR screen 12. That is, the user can easily adjust the emission color of the illumination attached to the tip of robot 150 via XR screen 12. As an example, by combining the image capturing function and the emission color adjustment function of light source 146, the user can find out the emission color of light source 146 suitable for appearance inspection of workpiece 144.

In an aspect, device 100 may be configured to be capable of changing the model number of the illumination corresponding to light source 146. In this case, device 100 changes the model number of the illumination corresponding to light source 146 in virtual space 15, and reflects the result on XR screen 12. XR event unit 216 detects a model number change event based on reception of an operation input for changing the model number of the illumination by XR input device 130.

As described with reference to Figs. 10 and 11, device 100 includes light source adjustment unit 222. Light source adjustment unit 222 changes at least one of on/off, the model number, the brightness, or the emission color of light source 146 based on detection of the setting change event of light source 146. The setting change event of light source 146 includes the on/off switching event of light source 146, the brightness adjustment event of light source 146, the emission color adjustment event of light source 146, and the model number change event of the illumination corresponding to light source 146. Light source setting storage 226 stores a changed setting of light source 146.

### <D. Procedure of Processing by Device>

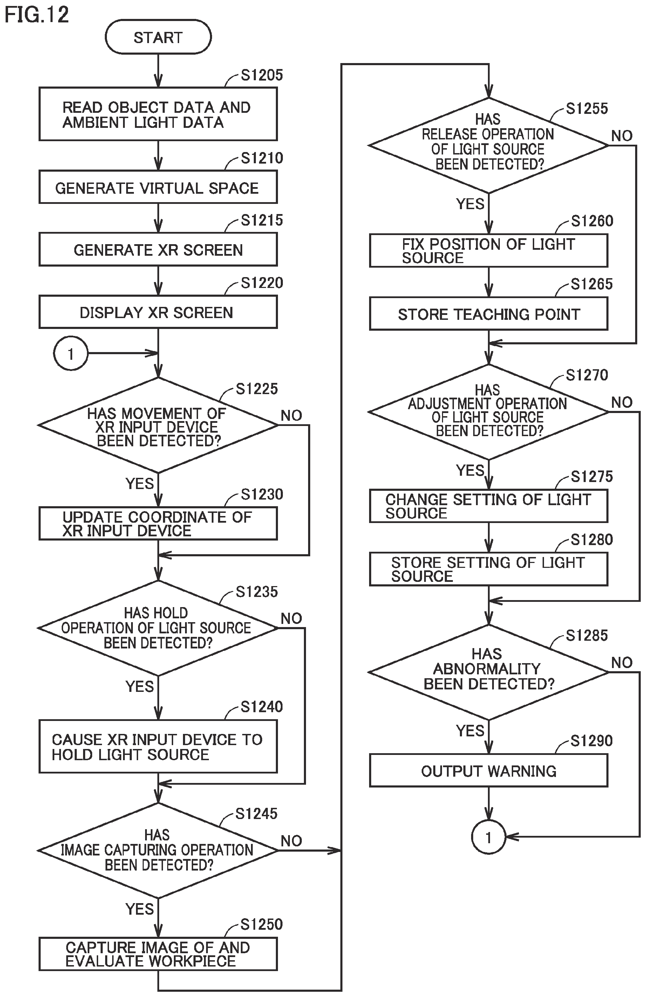

Fig. 12 is a diagram showing an example of a procedure of processing by system 10. In an aspect, processor 201 may execute program 210 to perform the processing in Fig. 12. At that time, program 210 is read from storage 203 into RAM 202. In another aspect, a part or all of the processing may be implemented as a combination of circuit elements configured to perform the processing. Further, each step shown in Fig. 12 may be performed in a rearranged order.

In step S1205, system 10 reads object data 236 and ambient light data 238 from storage 203. In step S1210, system 10 generates virtual space 15. More specifically, system 10 arranges various objects and various light sources in virtual space 15. In step S1215, system 10 generates XR screen 12. More specifically, system 10 generates XR screen 12 by superimposing or synthesizing a real space and virtual space 15. In step S1220, system 10 displays XR screen 12. System 10 displays XR screen 12 on at least XR output device 140. System 10 may further display XR screen 12 on output device 120.

In step S1225, system 10 determines whether or not movement of XR input device 130 has been detected. That is, system 10 determines whether or not the movement event of XR input device 130 has been detected. When system 10 determines that movement of XR input device 130 has been detected (YES in step S1225), system 10 makes the control proceed to step S1230. Otherwise (NO in step S1225), system 10 makes the control proceed to step S1235.

In step S1230, system 10 updates position information of XR input device 130. The position information may be a position in a three-dimensional coordinate space having marker 142 as an origin. In addition, system 10 also updates position information of laser beam 148. When XR input device 130 has held light source 146, system 10 also updates position information of light source 146. Further, system 10 updates XR screen 12. When XR screen 12 is updated, each of laser beam 148 and light source 146 moves on XR screen 12 if the position information thereof has been updated.

In step S1235, system 10 determines whether or not a hold operation of light source 146 has been detected. That is, system 10 determines whether or not the hold event of light source 146 has been detected. When system 10 determines that the hold operation of light source 146 has been detected (YES in step S1235), system 10 makes the control proceed to step S1240. Otherwise (NO in step S1235), system 10 makes the control proceed to step S1245. In step S1240, system 10 causes XR input device 130 to hold light source 146.

In step S1245, system 10 determines whether or not an image capturing operation has been detected. That is, system 10 determines whether or not the image capturing operation event has been detected. When system 10 determines that the image capturing operation has been detected (YES in step S1245), system 10 makes the control proceed to step S1250. Otherwise (NO in step S1245), system 10 makes the control proceed to step S1255. In step S1250, system 10 captures an image of workpiece 144 and evaluates the obtained image. More specifically, system 10 analyzes the image using an appearance inspection program or the like. System 10 displays the image and the image analysis result on XR screen 12, output device 120, or both.

In step S1255, system 10 determines whether or not a release operation of light source 146 has been detected. That is, system 10 determines whether or not the release event of light source 146 has been detected. When system 10 determines that the release operation of light source 146 has been detected (YES in step S1255), system 10 makes the control proceed to step S1260. Otherwise (NO in step S1255), system 10 makes the control proceed to step S1270. In step S1260, system 10 fixes the position of light source 146 in virtual space 15. Thus, the position of light source 146 is also fixed on XR screen 12. In step S1265, system 10 stores a teaching point of robot 150 corresponding to the fixed position of light source 146 in storage 203.

In step S1270, system 10 determines whether or not an adjustment operation of light source 146 has been detected. That is, system 10 determines whether or not the adjustment event of light source 146 has been detected. The adjustment operation of light source 146 here is any one of an on/off operation, an adjustment operation of the brightness, an adjustment operation of the emission color, and a change operation of the model number. When system 10 determines that the adjustment operation of light source 146 has been detected (YES in step S1270), system 10 makes the control proceed to step S1275. Otherwise (NO in step S1270), system 10 makes the control proceed to step S1285. In step S1275, system 10 changes the setting of light source 146. In step S1280, system 10 stores the setting of light source 146 in storage 203.

In step S1285, system 10 determines whether or not an abnormality has been detected. The abnormality here may include at least one of an abnormality related to the teaching point and an abnormality related to the light source. The abnormality related to the teaching point indicates that light source 146 has moved outside the movement range of robot 150. The abnormality related to the light source indicates that light is not sufficiently hitting workpiece 144, or light applied to workpiece 144 is too strong. When system 10 determines that the abnormality has been detected (YES in step S1285), system 10 makes the control proceed to step S1290. Otherwise (NO in step S1285), system 10 makes the control proceed to step S1225.

In step S1290, system 10 outputs a warning. In an aspect, system 10 may display the warning on XR output device 140, output device 120, or both. In another aspect, system 10 may cause XR input device 130 to vibrate. Furthermore, in another aspect, system 10 may output the warning in both of the above-described manners.

System 10 may end the processing shown in Fig. 12 based on reception of an operation input for ending teaching. System 10 may be configured to be capable of receiving the operation input for ending teaching from input device 110, XR input device 130, or both.

As described with reference to Fig. 12, device 100 can perform the processing related to teaching by executing program 210. The processing includes generating XR screen 12 that blends a real space and virtual space 15, displaying, on XR screen 12, a workpiece in virtual space 15 and a light source attached to robot 150 in virtual space 15, moving the light source on XR screen 12 based on detection of a movement event of the light source, and storing a teaching point of robot 150 that moves in conjunction with light source 146.

Further, device 100 includes abnormality detection unit 228 that detects an abnormality in virtual space 15. Further, device 100 includes warning unit 230 that outputs a warning based on detection of the abnormality. The abnormality may include an abnormality that light source 146 is outside a movement range of robot 150. Further, the abnormality includes at least one of an abnormality that an amount of light received by workpiece 144 is equal to or greater than a predetermined first threshold when light source 146 is turned on, or an abnormality that the amount of light received by workpiece 144 is less than a second threshold when light source 146 is turned on. That is, abnormality detection unit 228 can detect an abnormality such as an abnormality that light is not sufficiently hitting workpiece 144, an abnormality that light applied to workpiece 144 is too strong, or the like.

Furthermore, the warning output by warning unit 230 includes at least one of display of warning information on XR screen 12, display of the warning information on output device 120 connected to device 100, or vibration of XR input device 130 for moving light source 146.

In an aspect, device 100 may be provided as a web application, a service on a cloud, or a system. In this case, input device 110, output device 120, XR input device 130, and XR output device 140 are connected to a user terminal. Device 100 is configured to be capable of communicating with the user terminal via communication unit 207. Device 100 receives various information output by input device 110, XR input device 130, and XR output device 140 from the user terminal. Various information received by device 100 includes information about an operation input from the user, information about a position or movement of XR input device 130, a captured video, and the like. Device 100 can update virtual space 15 and XR screen 12 based on these pieces of information. Further, device 100 can store a teaching point and store a setting of light source 146 based on these pieces of information. Further, device 100 can transmit generated XR screen 12 to the user terminal.

### <E. Summary>

As described above, system 10 according to the present embodiment has the function of intuitively performing teaching of robot 150. More specifically, system 10 generates XR screen 12 in which the real space and virtual space 15 are superimposed or synthesized. Workpiece 144 and light source 146 corresponding to the illumination attached to the tip of robot 150 are displayed on XR screen 12. Further, the effect of the ambient light on workpiece 144 is reproduced on XR screen 12. That is, by using system 10, the user can perform teaching of robot 150 under conditions similar to the real world regarding the brightness. Thus, as an example, the user can perform teaching of robot 150 using system 10 without going to a planned construction site for a line to adjust actual robot 150.

Further, system 10 has the function of capturing an image of workpiece 144 and the image analysis function for the image obtained by image capturing. By using these functions, the user can check whether or not appearance inspection of workpiece 144 can be appropriately performed at a current teaching point.

Further, system 10 can change one or more of on/off, the model number, the brightness, and the emission color of light source 146. By using this function, the user can perform teaching under conditions of various types of illumination.

Furthermore, by applying the XR technology to teaching of robot 150, system 10 makes it possible to intuitively perform teaching even in a place where there is no actual robot 150. By using system 10, the user can perform teaching of robot 150 under conditions in which the real-world ambient light is reproduced, regardless of location. Further, an intuitive user interface of system 10 can reduce man-hours for teaching.

### <F. Additional Aspects>

As described above, the present embodiment includes the following disclosure.

### [Configuration 1]

A device (100) comprising:
an XR screen generator (214) configured to generate an XR (Cross Reality) screen (12) that blends a real space and a virtual space (15);
an XR event unit (216) configured to detect an event related to the XR screen (12);
an arrangement unit (218) configured to update a position of a light source (146) provided at a tip of a robot (150) in the virtual space (15); and
a teaching point storage (224) configured to store a teaching point of the robot (150), wherein
the XR screen generator (214) is configured to display, on the XR screen (12), a workpiece (144) and the light source (146) in the virtual space (15),
the arrangement unit (218) is configured to move the light source (146) on the XR screen (12) based on detection of a movement event of the light source (146), and
the teaching point storage (224) is configured to store the teaching point of the robot (150) that moves in conjunction with the light source (146).

### [Configuration 2]

The device (100) according to Configuration 1, wherein
the XR screen generator (214) is configured to
read ambient light data (238) about ambient light in a real world, and
reproduce reflected light from a surface of the workpiece (144) on the XR screen (12) based on light from the ambient light in the real world and light from the light source (146).

### [Configuration 3]

The device (100) according to Configuration 1 or 2, wherein
the arrangement unit (218) is configured to fix the light source (146) on the XR screen (12) based on detection of a release event of the light source (146), and
storing the teaching point of the robot (150) includes storing the teaching point of the robot (150) corresponding to a position and a posture of the fixed light source (146).

### [Configuration 4]

The device (100) according to Configuration 1 or 2, further comprising
an image capturing unit (220) configured to capture an image of the workpiece (144) by a camera virtually arranged in a vicinity of the light source (146), based on detection of an image capturing event.

### [Configuration 5]

The device (100) according to Configuration 4, wherein
the XR screen generator (214) is configured to display the captured image of the workpiece (144) on the XR screen (12).

### [Configuration 6]

The device (100) according to Configuration 4, further comprising
a UI processor (234) configured to display the captured image of the workpiece (144) on a display of the device (100).

### [Configuration 7]

The device (100) according to Configuration 4, further comprising
an evaluation unit (232) configured to perform image analysis on the captured image of the workpiece (144), wherein
displaying the image of the workpiece (144) includes displaying an image analysis result.

### [Configuration 8]

The device (100) according to Configuration 1 or 2, further comprising:
a light source adjustment unit (222) configured to change at least one of on/off, a model number, brightness, or an emission color of the light source (146) based on detection of a setting change event of the light source (146); and
a light source setting storage (226) configured to store a changed setting of the light source (146).

### [Configuration 9]

The device (100) according to Configuration 1 or 2, further comprising:
an abnormality detection unit (228) configured to detect an abnormality in the virtual space (15); and
a warning unit (230) configured to output a warning based on detection of the abnormality, wherein
the abnormality includes an abnormality that the light source (146) is outside a movement range of the robot (150).

### [Configuration 10]

The device (100) according to Configuration 9, wherein
the abnormality includes at least one of an abnormality that an amount of light received by the workpiece (144) is equal to or greater than a predetermined first threshold when the light source (146) is turned on, or an abnormality that the amount of light received by the workpiece (144) is less than a second threshold when the light source (146) is turned on.

### [Configuration 11]

The device (100) according to Configuration 9, wherein
the warning output by the warning unit includes at least one of display of warning information on the XR screen (12), display of the warning information on an output device (100) connected to the device (100), or vibration of an XR input device (100) configured to move the light source (146).

### [Configuration 12]

The device (100) according to Configuration 1 or 2, further comprising
a setting output unit configured to output the teaching point of the robot (150).

### [Configuration 13]

A control method for a device (100), the control method comprising:
generating an XR screen (12) that blends a real space and a virtual space (15);
displaying, on the XR screen (12), a workpiece (144) in the virtual space (15) and a light source (146) attached to a robot (150) in the virtual space (15);
moving the light source (146) on the XR screen (12) based on detection of a movement event of the light source (146); and
storing a teaching point of the robot (150) that moves in conjunction with the light source (146).

### [Configuration 14]

A program (210) for causing a device (100) to perform:
generating an XR screen (12) that blends a real space and a virtual space (15);
displaying, on the XR screen (12), a workpiece (144) in the virtual space (15) and a light source (146) attached to a robot (150) in the virtual space (15);
moving the light source (146) on the XR screen (12) based on detection of a movement event of the light source (146); and
storing a teaching point of the robot (150) that moves in conjunction with the light source (146).

It should be understood that the embodiment disclosed herein is illustrative and non-restrictive in every respect. The scope of the present disclosure is defined by the terms of the claims, rather than the description above, and is intended to include any modifications within the scope and meaning equivalent to the terms of the claims. Further, contents of the disclosure described in the embodiment and each modification are intended to be carried out alone or in combination to a possible extent.

### REFERENCE SIGNS LIST

10 system; 12, 300, 400, 500, 600, 700, 800A, 800B, 900, 1000A, 1000B, 1000C, 1100A, 1100B XR screen; 15 virtual space; 100 device; 110 input device; 120 output device; 130 XR input device; 140 XR output device; 142 marker; 144 workpiece; 146 light source; 148 laser beam; 150 robot; 152 camera; 201 processor; 202 RAM; 203 storage; 204 input unit; 205 output unit; 206 external device connection unit; 207 communication unit; 210 program; 212 virtual space generator; 214 XR screen generator; 216 XR event unit; 218 arrangement unit; 220 image capturing unit; 222 light source adjustment unit; 224 teaching point storage; 226 light source setting storage; 228 abnormality detection unit; 230 warning unit; 232 evaluation unit; 234 UI processor; 236 object data; 238 ambient light data; 905 image; 910 image analysis result.

## Claims

1. A device comprising:
an XR screen generator configured to generate an XR (Cross Reality) screen that blends a real space and a virtual space;
an XR event unit configured to detect an event related to the XR screen;
an arrangement unit configured to update a position of a light source provided at a tip of a robot in the virtual space; and
a teaching point storage configured to store a teaching point of the robot, wherein
the XR screen generator is configured to display, on the XR screen, a workpiece and the light source in the virtual space,
the arrangement unit is configured to move the light source on the XR screen based on detection of a movement event of the light source, and
the teaching point storage is configured to store the teaching point of the robot that moves in conjunction with the light source.

2. The device according to claim 1, wherein
the XR screen generator is configured to
read ambient light data about real-world ambient light, and
reproduce reflected light from a surface of the workpiece on the XR screen based on light from the real-world ambient light and light from the light source.

3. The device according to claim 1 or 2, wherein
the arrangement unit is configured to fix the light source on the XR screen based on detection of a release event of the light source, and
storing the teaching point of the robot includes storing the teaching point of the robot corresponding to a position and a posture of the fixed light source.

4. The device according to claim 1 or 2, further comprising
an image capturing unit configured to capture an image of the workpiece by a camera virtually arranged in a vicinity of the light source, based on detection of an image capturing event.

5. The device according to claim 4, wherein
the XR screen generator is configured to display the captured image of the workpiece on the XR screen.

6. The device according to claim 4, further comprising
a UI processor configured to display the captured image of the workpiece on a display of the device.

7. The device according to claim 4, further comprising
an evaluation unit configured to perform image analysis on the captured image of the workpiece, wherein
displaying the image of the workpiece includes displaying an image analysis result.

8. The device according to claim 1 or 2, further comprising:
a light source adjustment unit configured to change at least one of on/off, a model number, brightness, or an emission color of the light source based on detection of a setting change event of the light source; and
a light source setting storage configured to store a changed setting of the light source.

9. The device according to claim 1 or 2, further comprising:
an abnormality detection unit configured to detect an abnormality in the virtual space; and
a warning unit configured to output a warning based on detection of the abnormality, wherein
the abnormality includes an abnormality that the light source is outside a movement range of the robot.

10. The device according to claim 9, wherein
the abnormality includes at least one of an abnormality that an amount of light received by the workpiece is equal to or greater than a predetermined first threshold when the light source is turned on, or an abnormality that the amount of light received by the workpiece is less than a second threshold when the light source is turned on.

11. The device according to claim 9, wherein
the warning output by the warning unit includes at least one of display of warning information on the XR screen, display of the warning information on an output device connected to the device, or vibration of an XR input device configured to move the light source.

12. The device according to claim 1 or 2, further comprising
a setting output unit configured to output the teaching point of the robot.

13. A control method for a device, the control method comprising:
generating an XR screen that blends a real space and a virtual space;
displaying, on the XR screen, a workpiece in the virtual space and a light source attached to a robot in the virtual space;
moving the light source on the XR screen based on detection of a movement event of the light source; and
storing a teaching point of the robot that moves in conjunction with the light source.

14. A program for causing a device to perform:
generating an XR screen that blends a real space and a virtual space;
displaying, on the XR screen, a workpiece in the virtual space and a light source attached to a robot in the virtual space;
moving the light source on the XR screen based on detection of a movement event of the light source; and
storing a teaching point of the robot that moves in conjunction with the light source.
